# EUROPEAN PATENT SPECIFICATION

(11) **EP 2 405 739 B1**
(45) Date of publication and mention of the grant of the patent: **28.10.2015**
(21) Application number: 10723762.0
(22) Date of filing: 09.03.2010
(51) Int. Cl.: A01K 13/00, A61D 9/00

(54) **AFTER-SURGERY GARMENT FOR ANIMALS**
POSTCHIRURGISCHE KLEIDUNG FÜR TIERE
VÊTEMENT APRÈS CHIRURGIE POUR ANIMAUX

(30) Priority: 09.03.2009 IT MO20090051
(43) Date of publication of application: 18.01.2012
(73) Proprietor: Un Ciuffo Di Pelo S.N.C. Di Sogari Paola & C., 41019 Soliera (MO) (IT)
(72) Inventor: SOGARI, Paola, 41019 Soliera (MO) (IT); MALAVASI, Mirco, 41019 Soliera (MO) (IT)
(74) Representative: Brunacci, Marco
(86) International application number: PCT/IB2010/000485
(87) International publication number: WO 2010/103373

(56) References cited:
- DE-U1-202008 002 825
- FR-A- 2 520 608
- JP-U- 59 023 956
- US-A- 2 400 781
- US-A- 4 355 600
- US-A1- 2008 110 414
- US-B1- 6 595 162

## Description

### Technical Field

The present invention relates to an after-surgery garment for animals, particularly for four-legged animals.

### Background Art

It is known that animals such as dogs and cats, after undergoing surgery such as sterilization, mastectomies, operations on cross ligaments or the like, require a period of rest and rehabilitation due to the injuries produced and localised which having required, in most cases, the application of stitches, consequently need medication and/or drainage during the following days suitable for ensuring the full physical recovery of the animal.

It is further known that the animals, following such surgical operations, instinctively tend to lick and/or scratch the operated area with their paws, further injuring themselves and with the risk of causing undesired inflections. To therefore prevent the animal from reaching the operated area and injuring itself, protection collars are normally used, called Elizabethan collars.

These collars are substantially shaped by a funnel and are fitted on the neck of the animal so the sides of the collar surround its head, so as to prevent it from licking itself or biting the wound.

These protection collars do however have a number of drawbacks because their use is very troublesome for the animal, especially if worn for long periods.

The animal in fact is very much conditioned by the presence of the collar which, in particular, restricts its perception of the surrounding environment to such an extent as to modify its behaviour and even its eating habits.

It has further been found that the use of the Elizabethan collar even results in the animal's immune defences being reduced.

What is more, this type of collar only offers partial protection inasmuch as it does not prevent the animal from using its limbs to scratch the wound or the operated area.

As an alternative to these types of collars, protection garments can be used such as those described in FR 2 520 608.

More in particular, FR 2 520 608 describes a protection garment having a plurality of openings for inserting the animal's limbs and which is shaped so as to fully wrap around the animal's torso.

This garment is particularly suitable in the case of post-operatory situations, to prevent the animal from making direct contact with the operated area.

These protection garments also have drawbacks however.

In fact, these protection garments do not adhere in a reliable way to the animal's torso and the latter, using its rear legs, can cause the garment to rotate with respect to its torso, thereby causing rubbing on the wound with consequent deterioration of same.

Garments for animals are disclosed, for example, in US 4 355 600, DE 20 2008 002825, US 6 595 162, US 2 400 781, US 2008/110414.

### Object of the Invention

The main aim of the present invention is to provide an after-surgery garment for animals that allows effectively and reliably protecting the operated areas and an animal's wounds and which, at the same time, does not cause any suffering to the animal itself.

Within this aim, one object of the present invention is to allow the complete protection of the operated area, such as to prevent the animal from contacting such area both with its teeth and with its paws and, at the same time, avoid any rubbing against the wound.

Another object of the present invention is to provide an after-surgery garment for animals which allows overcoming the mentioned drawbacks of the state of the art within the ambit of a simple, rational, easy, effective to use and low cost solution.

The above objects are all achieved by the present after-surgery garment for animals that has the features set forth in claim 1.

Evident from the description of a preferred, but not sole, embodiment of an after-surgery garment for animals, illustrated purely as an example but not limited to the annexed drawings in which:
figure 1 is a plan view from above of the garment according to the invention, with the protection element substantially open;
figure 2 is a plan view from below of a first embodiment of the garment according to the invention, with the protection element substantially open;
figure 3 is a plan view from above of a second embodiment of the garment according to the invention, with the protection element substantially open;
figure 4 is a perspective view of the garment according to the invention fitted to an animal;
figure 5 is a front view of the garment according to the invention with a collar applied;
figure 6 is a perspective view of a portion of the garment according to the invention having an appendix for covering the limbs of the animal.

### Embodiments of the Invention

With particular reference to such figures, globally indicated by 1 is an after-surgery garment for animals, particularly for four-legged animals.

The garment 1 comprises a protection element 2 for protecting wounds that can be fitted on the torso of an animal A and having at least four openings 3a and 3b for the insertion of its limbs.

More in particular, the front part 2a and the rear part 2b of the protection element 2 define an area for fitting the neck and an area for fitting the tail respectively of the animal A and the openings 3a and 3b comprise two front openings 3a and two rear openings 3b.

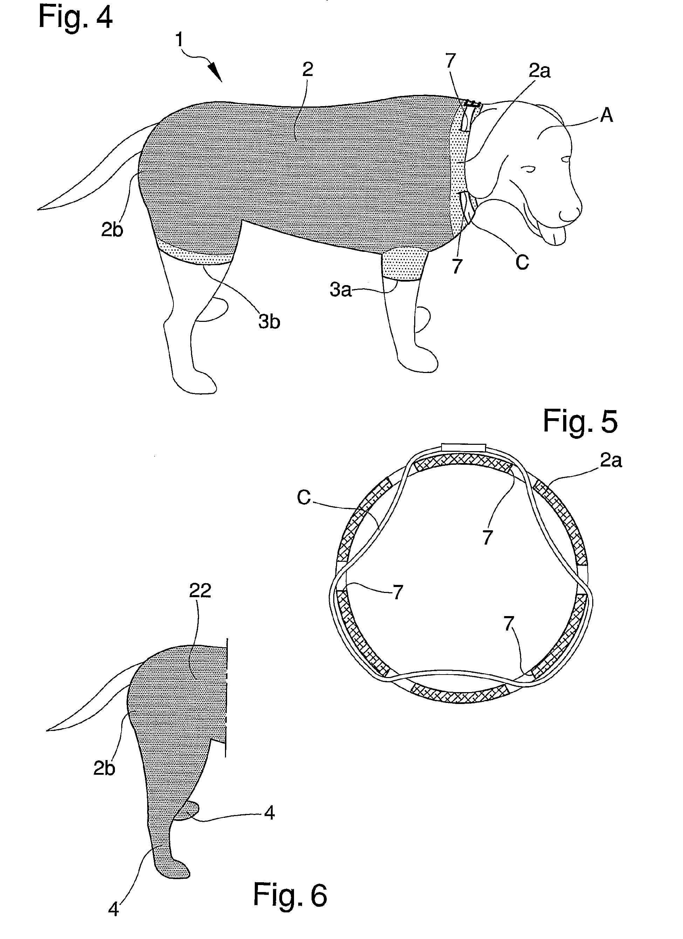

Advantageously, as shown in the embodiment of figure 6, the garment 1 can also comprise one or more appendices 4 suitable for covering, at least in part, the limbs of the animal A. Suitably, the appendices 4 are associated integral with the protection element 2 in correspondence to the openings 3a and 3b.

In the particular embodiment shown, the appendices 4 fully cover the limbs of the animal A. This turns out to be of considerable importance inasmuch as, as experts in the sector well know, animals have great sensitivity in the lower part of their legs and the presence of a layer of fabric that covers the legs themselves results therefore in a reduction in the sensitivity of the animal, which consequently instinctively reduces its movements. In the embodiment of figure 6, the appendices 4 are made all one piece with the protection element 2, and the garment 1 is therefore made up of a single piece suitable for covering the torso and the limbs of the animal A.

According to the invention, the protection element 2 is made of a material comprising at least cotton and an elastomer.

The presence of the elastomer makes the material slippery so that if the animal tries to scratch the operated area using its paws, these are unable to grip the material.

The cotton is present in a quantity varying between 85% and 97%, preferably 92%, and the elastomer is present in a quantity varying between 15% and 3%, preferably 8%.

This material is of the washable type, non-toxic and does not contain colouring agents.

Advantageously, the appendices 4 are made of the same material of the protection element 2.

According to the invention, the protection element 2 comprises one or more stitches 5 arranged longitudinally on the protection element 2 to prevent the rotation of the protection element itself with respect to the animal A.

More in particular, the stitches 5 extend between at least a front opening 3 a and the corresponding rear opening 3b.

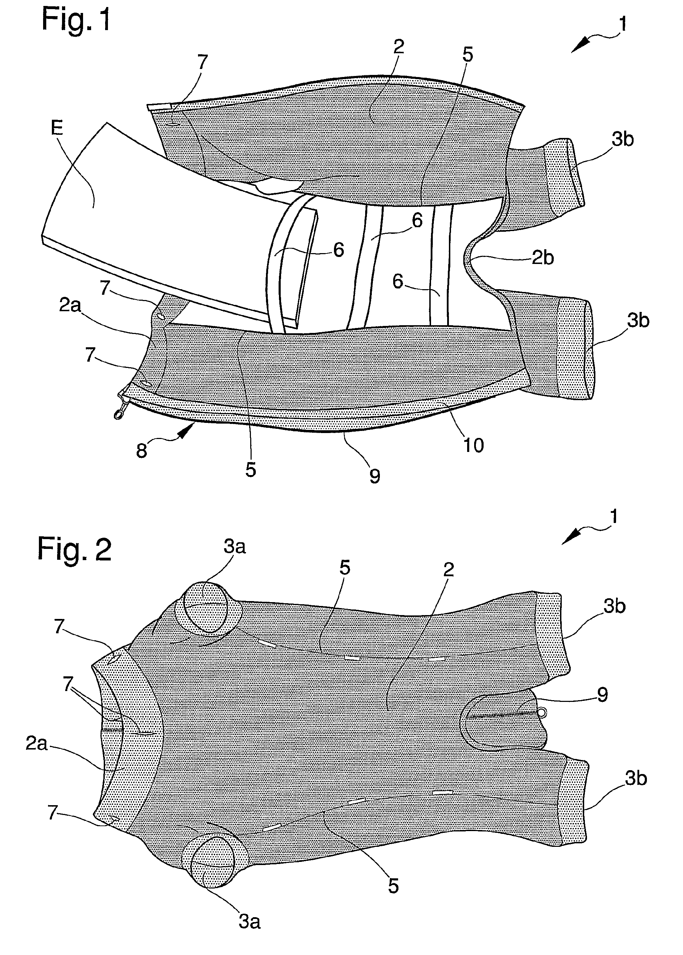

In the embodiment shown in figure 2, the protection element 2 comprises two stitches 5 each of which placed between a relative front opening 3a and the corresponding rear opening 3b.

In an alternative embodiment, the garment 1 comprises at least a pair of stitches 5 placed between the same front opening 3 a and the corresponding rear opening 3b.

Preferably, the reciprocal distance between this pair of stitches 5 increases proceeding from the relative front opening 3a towards the corresponding rear opening 3b.

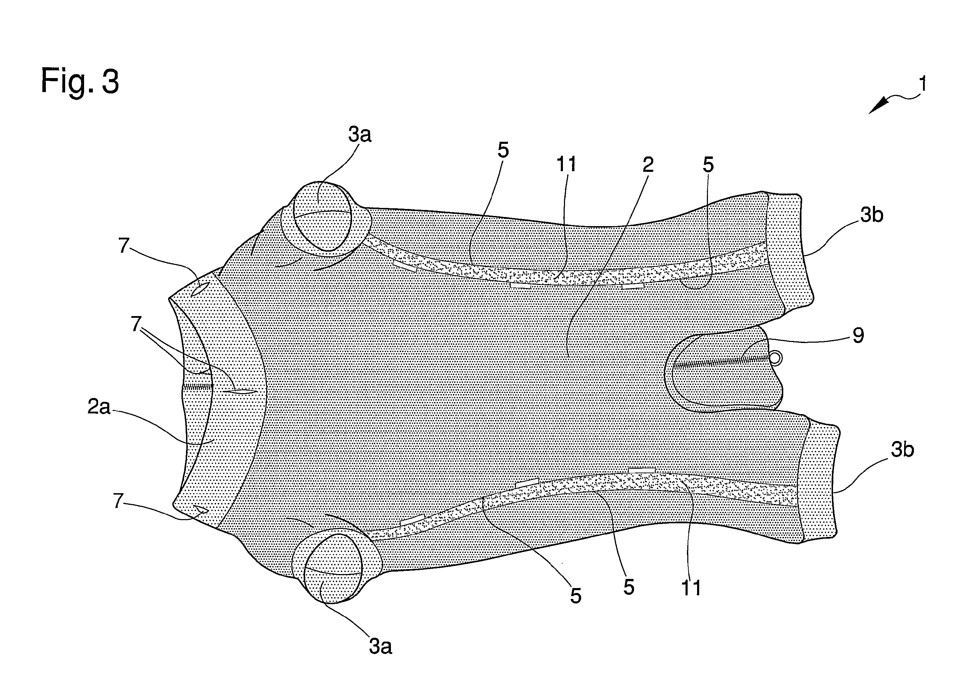

In the embodiment shown in the figure 3, the garment 1 comprises two pairs of stitches 5 each of which interposed between a relative front opening 3a and the corresponding rear opening 3b.

Advantageously, the garment 1 comprises at least an additional strip 11 associated with the protection element 2 by means of at least one of the pairs of stitches 5. The width of the additional strip 11 then increases gradually proceeding from the relative front opening 3a towards the corresponding rear opening 3b.

Preferably, an additional strip 11 is interposed between each pair of stitches 5 shown in figure 3.

Suitably, the additional strip 11 is made of the same material of the protection element 2.

Preferably, the garment 1 comprises retention means of at least an absorbing element E, e.g., a gauze, associated with the protection element 2 in correspondence to its internal surface meant to come into contact with the animal A.

More in particular, the retention means comprise one or more elastic elements 6 and the absorbing element E is positioned between the elastic elements 6 and the internal surface of the protection element 2.

Suitably, the extremities of the elastic elements 6 are arranged in the proximity of the stitches 5.

Advantageously, the garment 1 comprises at least a slot 7 for fitting a collar C defined in correspondence to the front part 2a of the protection element 2 which can be fitted on the neck of the animal A.

More in particular, as shown in the figure 4, the garment 1 comprises a plurality of slots 7 arranged in succession the one with the other in correspondence to the front part 2a, in such a way that the collar C can be fitted alternatively inside and outside the protection element 2.

Preferably, the garment 1 comprises opening/closing means 8 of the protection element 2.

More in particular, the opening /closing means 8 comprise at least a zip fastener 9 arranged longitudinally on the protection element 2. The zip fastener 9 is suitably arranged in correspondence to the symmetry plane of the protection element 2 and is substantially on the opposite side with respect to the elastic elements 6.

The position of the elastic elements 6 and of the zip fastener 9 can vary in the different embodiments depending on the position of the operated area of the animal's body. Consequently, in the case of the operated area being on the animal's belly, the elastic elements 6 are positioned on the protection element 2 so as to contact this precise area and the zip fastener 9 is arranged so as to be located in correspondence to the back of the animal A. Obviously, the positions of the elastic elements 6 and of the zip fastener 9 will be switched over in the case of the operated area being in correspondence to the back of the animal A. More in particular, the zip fastener 9 is positioned so as to close starting from the front part 2a of the protection element 2 towards the rear part 2b opposite the front part 2a. This solution proves advantageous in particular for long-haired animals inasmuch as it allows preventing the fur from becoming trapped in the zip fastener 9 when this is closed.

Furthermore, the opening/closing means 8 also comprise a strip 10 for protecting the fur of the animal A arranged below the zip fastener 9. The strip 10 is then arranged in correspondence to the internal surface of the protection element 2 and can be interposed between the zip fastener 9 and the animal A. Advantageously, the present invention also envisages an after-surgery kit for animals, comprising a garment 1 contained under vacuum inside a pack not shown in the illustrations.

The present invention operates as follows.

The protection element 2 is first of all opened by means of the zip fastener 9, so as to be able to insert an absorbing element E between the internal surface of the protection element 2 and the elastic elements 6.

The absorbing element E thus fitted is kept in position by the elastic elements 6 and its purpose is to absorb any blood escaping from the wound of the animal A, that could also pass through any gauze placed on the wound itself.

Once the absorbing element E has thus been positioned, the protection element 2 is fitted, and, if necessary, also the appendices 4 in the case of the second embodiment shown in figure 6, on the animal A. More in particular, the limbs of the animal A are fitted inside the corresponding openings 3a and 3b, after which the zip fastener 9 is closed so as to make the protection element 2 adhere to the torso of the animal A.

At this point, the collar C is fitted inside the slots 7, making it pass alternatively at the inside and at the outside of the protection element 2. This way, the animal A is prevented from inserting its nose underneath the protection element 2 to remove it.

It has in fact been ascertained how the described invention achieves the set objects and in particular the fact is underlined that it allows performing an effective protective action of the wounds and of the operated areas of an animal, covering them completely, and at the same time leaves the animal free to move. The garment according to the invention in fact, does not restrict the animal's movements, but prevents it from reaching the operated area and also protects this from possible external agents.

The conformation of the garment according to the invention, and in particular of its stitches, results in the protection element fitted to the animal's torso always remaining in the same position, thereby preventing the fabric from rubbing on the wound.

## Claims

1. After-surgery garment (1) for animals comprising at least one protection element (2) for protecting wounds that can be fitted on the torso of an animal (A) and having at least four openings (3a, 3b) for the insertion of its limbs, of which two front openings (3a) and two rear openings (3b), and **characterized by** the fact that it comprises one or more stitches (5) arranged longitudinally on said protection element (2) and which extend between at least one of said front openings (3a) and the corresponding rear opening (3b) to prevent the rotation of the protection element itself with respect to the animal (A) and by the fact that said protection element is made of a material comprising at least cotton and an elastomer.

2. Garment (1) according to claim 1, **characterized by** the fact that it comprises at least a pair of said stitches (5) placed between the same front opening (3a) and the corresponding rear opening (3b).

3. Garment (1) according to claim 2, **characterized by** the fact that the reciprocal distance between said pair of stitches (5) increases proceeding from the relative front opening (3 a) towards the corresponding rear opening (3b).

4. Garment (1) according to claim 2 or 3, **characterized by** the fact that it comprises at least an additional strip (11) associated with said protection element (2) by means of said pair of stitches (5).

5. Garment (1) according to one or more of the preceding claims, **characterized by** the fact that it comprises retention means of at least an absorbing element (E) associated with said protection element (2) in correspondence to its internal surface meant to come into contact with the animal (A).

6. Garment (1) according to claim 5, **characterized by** the fact that said retention means comprise at least an elastic element (6).

7. Garment (1) according to claim 6, **characterized by** the fact that the extremities of said elastic element (6) are arranged in correspondence to said stitches (5).

8. Garment (1) according to one or more of the preceding claims, **characterized by** the fact that it comprises at least a slot (7) for fitting a collar (C) defined in correspondence to the front part (2a) of said protection element (2) that can be fitted on the neck of the animal (A).

9. Garment (1) according to one or more of the preceding claims, **characterized by** the fact that it comprises opening/closing means (8) for said protection element (2).

10. Garment (1) according to claim 9, **characterized by** the fact that said opening/closing means (8) comprise at least a zip fastener (9) arranged longitudinally on said protection element (2).

11. Garment (1) according to claim 10, **characterized by** the fact that said zip fastener (9) is positioned so as to close from the front part (2a) of said protection element (2), fittable on the neck of the animal (A), towards its rear part (2b) opposite said front part (2a).

12. Garment (1) according to claim 10 or 11, **characterized by** the fact that said opening/closing means (8) comprise at least a strip (10) for protecting the fur of the animal (A) arranged below said zip fastener (9) and arranged in correspondence to the internal surface of said protection element (2) meant to come into contact with the animal (A).

13. Garment (1) according to one or more of the preceding claims, **characterized by** the fact that said protection element (2) is made of a material comprising cotton in a quantity varying between 85% and 97% and elastomer in a quantity varying between 3% and 15%.

14. Garment (1) according to claim 13, **characterized by** the fact that the cotton is present in a quantity equal to 92% and the elastomer is present in a quantity equal to 8%.

15. Garment (1) according to one or more of the preceding claims, **characterized by** the fact that it comprises at least an appendix (4) suitable for covering at least partially a limb of the animal (A).

## Patentansprüche

1. Kleidungsstück (1) für Tiere zum Tragen nach einer Operation, umfassend wenigstens ein Schutzelement (2) zum Schutz von Wunden, das auf den Torso eines Tieres (A) angepasst werden kann und wenigstens vier Öffnungen (3a, 3b) zum Einführen von dessen Gliedmaßen aufweist, von denen zwei vordere Öffnungen (3a) und zwei hintere Öffnungen (3b) sind, und **gekennzeichnet durch** die Tatsache, dass es einen oder mehrere Stiche (5) umfasst, die in Längsrichtung auf dem Schutzelement (2) angeordnet sind, und die sich zwischen der wenigstens einen der vorderen Öffnungen (3a) und der entsprechenden hinteren Öffnung (3b) erstrecken, um die Rotation des Schutzelementes selbst in Bezug auf das Tier (A) zu verhindern, und **durch** die Tatsache, dass das Schutzelement aus einem Material hergestellt ist, das wenigstens Baumwolle und ein Elastomer umfasst.

2. Kleidungsstück (1) nach Anspruch 1, **gekennzeichnet durch** die Tatsache, dass es wenigstens ein Paar von diesen Stichen (5) umfasst, die zwischen derselben vorderen Öffnung (3a) und der entsprechenden hinteren Öffnungen (3b) angeordnet sind.

3. Kleidungsstück (1) nach Anspruch 2, **gekennzeichnet durch** die Tatsache, dass sich der wechselseitige Abstand zwischen dem Paar von Stichen (5) fortlaufend von der jeweiligen vorderen Öffnung (3a) zur entsprechenden hinteren Öffnung (3b) erhöht.

4. Kleidungsstück (1) nach Anspruch 2 oder 3, **gekennzeichnet durch** die Tatsache, dass es wenigstens einen zusätzlichen Streifen (11) umfasst, der mit dem Schutzelement (2) mittels des Paars von Stichen (5) zusammenhängt.

5. Kleidungsstück (1) nach einem oder mehreren der vorangehenden Ansprüche,
**gekennzeichnet durch** die Tatsache, dass es Rückhaltemittel von wenigstens einem absorbierenden Element (E) umfasst, die mit dem Schutzelement (2) bezüglich seiner inneren Oberfläche, die dafür vorgesehen ist, mit dem Tier (A) in Kontakt zu kommen, zusammenhängt.

6. Kleidungsstück (1) nach Anspruch 5, **gekennzeichnet durch** die Tatsache, dass die Rückhaltemittel wenigstens ein elastisches Element (6) umfassen.

7. Kleidungsstück (1) nach Anspruch 6, **gekennzeichnet durch** die Tatsache, dass die Extremitäten des elastischen Elements (6) entsprechend der Stiche (5) angeordnet sind.

8. Kleidungsstück (1) nach einem oder mehreren der vorangehenden Ansprüche,
**gekennzeichnet durch** die Tatsache, dass es wenigstens eine Aussparung (7) umfasst, um einen Kragen (C) einzupassen, der entsprechend dem vorderen Teil (2a) des Schutzelements (2) definiert ist, der dem Nacken des Tieres (A) angepasst werden kann.

9. Kleidungsstück (1) nach einem oder mehreren der vorangehenden Ansprüche,
**gekennzeichnet durch** die Tatsache, dass es Öffnungs-/Schließmittel (8) für das Schutzelement (2) umfasst.

10. Kleidungsstück (1) nach Anspruch 9, **gekennzeichnet durch** die Tatsache, dass die Öffnungs-/Schließmittel (8) wenigstens einen Reißverschluss (9) umfassen, der in Längsrichtung auf dem Schutzelement (2) angeordnet ist.

11. Kleidungsstück (1) nach Anspruch 10, **gekennzeichnet durch** die Tatsache, dass der Reißverschluss (9) derart positioniert ist, dass er vom vorderen Teil (2a) des Schutzelements (2) geschlossen wird, anpassbar auf den Nacken des Tieres (A), in Richtung des hinteren Teils (2b) gegenüber dem vorderen Teil (2a) geschlossen wird.

12. Kleidungsstück (1) nach Anspruch 10 oder 11, **gekennzeichnet durch** die Tatsache, dass die Öffnungs-/Schließmittel (8) wenigstens einen Streifen (10) zum Schutz des Fells des Tieres (A) umfassen, der unter dem Reißverschluss (9) angeordnet ist und entsprechend der inneren Oberfläche des Schutzelementes (2) angeordnet ist, die dafür vorgesehen ist, mit dem Tier (A) in Kontakt zu kommen.

13. Kleidungsstück (1) nach einem oder mehreren der vorangehenden Ansprüche,
**gekennzeichnet durch** die Tatsache, dass das Schutzelement (2) aus einem Material hergestellt ist, das Baumwolle in einer Menge, die zwischen 85% und 97% variiert, und Elastomer in einer Menge, die zwischen 3% und 15% variiert, umfasst.

14. Kleidungsstück (1) nach Anspruch 13, **gekennzeichnet durch** die Tatsache, dass die Baumwolle in einer Menge gleich 92% vorliegt, und das Elastomer in einer Menge gleich 8% vorliegt.

15. Kleidungsstück (1) nach einem oder mehreren der vorangehenden Ansprüche, **gekennzeichnet durch** die Tatsache, dass es wenigstens einen Anhang (4) umfasst, der geeignet ist, um eine Gliedmaße des Tieres (A) wenigstens teilweise zu bedecken.

## Revendications

1. Vêtement après chirurgie (1) pour animaux, comprenant au moins un élément de protection (2) destiné à protéger des blessures qui peuvent se trouver sur le torse d'un animal (A) et comportant au moins quatre ouvertures (3a, 3b) pour l'insertion de ses membres, dont deux ouvertures avant (3a) et deux ouvertures arrière (3b), et **caractérisé par le fait qu'**il comprend une ou plusieurs coutures (5) disposées longitudinalement sur ledit élément de protection (2) et qui s'étendent entre au moins l'une desdites ouvertures avant (3a) et l'ouverture arrière (3b) correspondante pour empêcher la rotation de l'élément de protection lui-même par rapport à l'animal (A), et **par le fait que** ledit élément de protection est constitué d'une matière comprenant au moins du coton et un élastomère.

2. Vêtement (1) selon la revendication 1, **caractérisé par le fait qu'**il comprend au moins une paire desdites coutures (5), placées entre la même ouverture avant (3a) et l'ouverture arrière (3b) correspondante.

3. Vêtement (1) selon la revendication 2, **caractérisé par le fait que** la distance mutuelle entre ladite paire de coutures (5) augmente en allant de l'ouverture avant (3a) concernée vers l'ouverture arrière (3b) correspondante.

4. Vêtement (1) selon la revendication 2 ou 3, **caractérisé par le fait qu'**il comprend au moins une bande supplémentaire (11) associée audit élément de protection (2) par l'intermédiaire de ladite paire de coutures (5).

5. Vêtement (1) selon une ou plusieurs des revendications précédentes, **caractérisé par le fait qu'**il comprend des moyens de rétention d'au moins un élément d'absorption (E) associé audit élément de protection (2) en correspondance avec la surface interne de ce dernier destinée à venir en contact avec l'animal (A).

6. Vêtement (1) selon la revendication 5, **caractérisé par le fait que** lesdits moyens de rétention comprennent au moins un élément élastique (6).

7. Vêtement (1) selon la revendication 6, **caractérisé par le fait que** les extrémités dudit élément élastique (6) sont disposées en correspondance avec lesdites coutures (5).

8. Vêtement (1) selon une ou plusieurs des revendications précédentes, **caractérisé par le fait qu'**il comprend au moins une fente (7) pour ajuster un col (C) défini en correspondance avec la partie avant (2a) dudit élément de protection (2) qui peut être ajustée sur le cou de l'animal (A).

9. Vêtement (1) selon une ou plusieurs des revendications précédentes, **caractérisé par le fait qu'**il comprend des moyens d'ouverture/de fermeture (8) destinés audit élément de protection (2).

10. Vêtement (1) selon la revendication 9, **caractérisé par le fait que** lesdits moyens d'ouverture/de fermeture (8) comprennent au moins une fermeture à glissière (9) disposée longitudinalement sur ledit élément de protection (2).

11. Vêtement (1) selon la revendication 10, **caractérisé par le fait que** ladite fermeture à glissière (9) est placée de manière à opérer une fermeture à partir de la partie avant (2a) dudit élément de protection (2), qui peut être ajustée sur le cou de l'animal (A), en allant vers sa partie arrière (2b) située à l'opposé de ladite partie avant (2a).

12. Vêtement (1) selon la revendication 10 ou 11, **caractérisé par le fait que** lesdits moyens d'ouverture/de fermeture (8) comprennent au moins une bande (10) de protection du pelage de l'animal (A) située au-dessous de ladite fermeture à glissière (9) et disposée en correspondance avec la surface interne dudit élément de protection (2) destinée à venir en contact avec l'animal (A).

13. Vêtement (1) selon une ou plusieurs des revendications précédentes, **caractérisé par le fait que** ledit élément de protection (2) est constitué d'une matière comprenant du coton, en une quantité variant entre 85 % et 97 %, et un élastomère, en une quantité variant entre 3 % et 15 %.

14. Vêtement (1) selon la revendication 13, **caractérisé par le fait que** le coton est présent en une quantité égale à 92 % et l'élastomère est présent en une quantité égale à 8 %.

15. Vêtement (1) selon une ou plusieurs des revendications précédentes, **caractérisé par le fait qu'**il comprend au moins un appendice (4) apte à couvrir au moins partiellement un membre de l'animal (A).
